# EUROPÄISCHE PATENTANMELDUNG

(11) **EP 2 581 628 A2**
(43) Veröffentlichungstag der Anmeldung: **17.04.2013**
(21) Anmeldenummer: 12006998.4
(22) Anmeldetag: 09.10.2012
(51) Int. Cl.: F16G 13/06, F16G 13/08, F16G 13/12, F16G 15/00, B65G 17/38, B66B 7/06

(54) **Vorrichtung zum endseltigen Festlegen einer Kette, Insbesondere einer Flyerkette**

(30) Priorität: 11.10.2011 DE 102011115501
(71) Anmelder: Rexnord Kette GmbH, 57518 Betzdorf (DE)
(72) Erfinder: Holschbach, Franz-Josef, 57584 Wallmenroth (DE); Steup, Ralf, 57518 Betzdorf (DE); Bleser, Bernhard, 58751 Polch (DE); Rapp, Herbert, 58091 Hagen (DE); Gerlach, Ulrich, 57537 Wissen (DE); Heuer, Jörg, 57518 Betzdorf (DE); Schopp, Michael, 57584 Scheuerfeld (DE); Lindemaier, Jörg, 58239 Schwerte (DE)
(74) Vertreter: Tilmann, Max Wilhelm

(57) **Zusammenfassung**

Die Erfindung betrifft eine Vorrichtung zur endseitigen Festlegung einer Flyerkette, wobei die Festlegung durch eine Klemmung mit einer Ausübung einer Kraft auf Teilabschnitte einer Außenumfangsfläche zumindest einer Lasche (1) zumindest eines endseitigen Glieds der Flyerkette durchführbar ist.

## Beschreibung

Die Erfindung betrifft eine Vorrichtung zum endseitigen Festlegen einer Kette, insbesondere einer Flyerkette.

Eine Flyerkette, die auch als Laschenkette bezeichnet wird, ist ein sicherheitsrelevantes Bauteil, das eine Lastkette bzw. Sicherheitshubkette ist, die üblicherweise als Zugorgan zur Umlenkung von Kräften dient. Die Flyerkette wird in Verbindung mit hydraulisch betätigten Zylindern oder als Gegengewichtskette eingesetzt. Sie gewährleistet eine hohe Tragkraft bei Hebezeugen und findet die weiteste Verbreitung bei den Hubmasten von Gabeistaplern. Eine weitere wichtige Funktion erfüllt sie auch als Gegengewichtskette bei Werkzeugmaschinen sowie als Hubkette in Container-Hubwagen.

Eine Flyerkette besteht aus Kettenbolzen und Laschen, bei denen man üblicherweise zwischen Außen-, Innen- und Zwischenlaschen unterscheidet, wobei die Laschen auf die Kettenbolzen in Anordnungen aufgereiht werden, die beispielsweise durch Normen wie die ISO 4347 vorgegeben sind.

Jedes Kettenglied einer Flyerkette setzt sich aus Außenlaschen und Innenlaschen bzw. Zwischenlaschen zusammen, die durch den Kettenbolzen unter Ausbildung eines Drehgelenks gelenkig miteinander verbunden sind. Die Außenlaschen besitzen üblicherweise einen Presssitz, wobei zusätzlich die in die Außenlaschen eingepressten Kettenbolzen vernietet werden können. Es besteht zwischen dem Kettenbolzen und den Außenlaschen eine Presspassung. Um die Gelenkigkeit zu gewährleisten, werden die Innen- und Zwischenlaschen üblicherweise mit einem Schiebesitz versehen, so dass eine Spielpassung zwischen dem Kettenbolzen und den Innen- bzw. Zwischenlaschen vorliegt. Eine derartige Flyerkette ist aus DE 34 31 317 C2 bekannt.

Flyerketten werden üblicherweise in Hubeinrichtungen über sogenannte Kettenanker an die Hubmaststruktur angebunden bzw. an diese angeschlagen. Die freien Innenlaschen der Flyerkette greifen dazu in entsprechende Aussparungen des Kettenankers ein und werden von einem Bolzen, der den gleichen Durchmesser wie der Kettenbolzen besitzt, aufgenommen. Die Laschenendglieder weisen sowohl eine größere Bohrung als auch eine größere Teilung auf, durch die eine einfache und leichte Befestigung der Flyerkette an dem Kettenanker sichergestellt werden soll. Für eine sichere Verbindung muss aber damit der Kettenanker ebenso wie das Ende der Flyerkette speziell ausgestaltet sein, wobei die Montage der Flyerkette an den Kettenanker mit hohem Aufwand verbunden ist.

Aufgabe der Erfindung ist es, eine vereinfachte Vorrichtung zum Festlegen eines Endes einer Flyerkette zu schaffen.

Ausgehend von dieser Aufgabenstellung wird erfindungsgemäß eine Vorrichtung gemäß Patentanspruch 1 vorgeschlagen, die eine vereinfachte Festlegung, im Sinne eines Anschlagens oder Befestigens, eines Endes einer Flyerkette ermöglicht.

Die Erfindung geht von dem Grundgedanken aus, die bisherige Bolzenverbindung mit dem Kettenanker durch eine über eine außen auf die Außenkontur bzw. den Außenumfang von endseitigen Laschen der Flyerkette wirkende Klemmung bzw. Klemmverbindung zu ersetzen. Eine derartige Klemmverbindung besitzt den Vorteil ohne weitere Bauelemente, die durch die Laschen oder in Anlage zu diesen speziell angepasst oder angeordnet werden müssen, die endseitige Festlegung der Flyerkette durchführen zu können. Unter Außenkontur bzw. Außenumfang wird hier der Außenrand der Laschen, der sich im Wesentlichen parallel zu den Durchgangsöffnungen für den Kettenbolzen bzw. parallel zum eingeführten Kettenbolzen erstreckt, verstanden.

Mit der erfindungsgemäßen Vorrichtung ist eine endseitige Festlegung einer Flyerkette durch eine Klemmung mit einer Ausübung einer Kraft auf Teilabschnitte einer Außenumfangsfläche zumindest einer Lasche zumindest eines endseitigen Glieds der Flyerkette durchführbar. Vorzugsweise ist ein endseitiges Glied der Flyerkette eines der Glieder im Bereich eines Endes der Flyerkette, insbesondere eines der letzten zwei bis fünf Glieder der Flyerkette. Die Vorrichtung weist demnach Anlageflächen für die Klemmung von Teilabschnitten der Außenumfangsfläche zumindest einer Lasche zumindest eines Glieds auf, mit der die Flyerkette in der Vorrichtung zur Ausbildung einer Klemmverbindung geklemmt wird. Die Flyerkette muss nicht speziell für die Klemmung ausgestaltet sein. Eine üblicherweise verwendete Flyerkette kann mit der erfindungsgemäßen Vorrichtung festgelegt werden. Vorzugsweise sind die Anlageflächen der Vorrichtung, mit denen die Laschen eines Glieds innerhalb der Vorrichtung in Anlage der Teilabschnitte zur Ausbildung der Klemmung derart mit der Vorrichtung gelangt, so angeordnet, dass die Längserstreckung von (geklemmten) Laschen eine von der Zugkraft abweichende Richtung aufweist. Zumindest ein Glied des festgelegten Endes der Flyerkette weist zumindest eine Lasche auf, die einen Winkel mit der Richtung der Zugkraft einschließt, der kleiner als 90° gemessen zur Richtung der Zugkraft ist. Die Lasche liegt bezogen auf die Richtung der auf die Flyerkette ausgeübten Zugkraft schräg.

Vorzugsweise weist die Vorrichtung ein zumindest teilweise umschlossenes Volumen zur Aufnahme eines Endes der Flyerkette auf, das einen teilumschlossenen Aufnahmeraum für das Ende der Flyerkette bildet. Durch ein zumindest teilweise umschlossenes Volumen können Anlageflächen für die Teilabschnitte einer Außenumfangsfläche der zumindest einen Lasche am endseitigen Ende der Flyerkette gebildet werden, mit denen die Klemmung erreicht werden kann. Je mehr von dem Volumen umschlossen ist, desto größer können die Anlageflächen zwischen der Vorrichtung und der festzulegenden Flyerkette gewählt werden, wobei mit zunehmender Anlagefläche die Klemmwirkung erhöht werden kann.

Die Klemmung kann vorzugsweise durch für die Klemmung vorgesehene miteinander verbindbare Wende erreicht werden, wobei durch die lösbare Verbindung ein einfacher Aufbau beispielsweise über Schraubverbindungen und/oder Schnappverbindungen erreichbar ist.

Ferner kann vorzugsweise vorgesehen sein, dass der Abstand zwischen den Wänden modulartig veränderbar ist, indem beispielsweise Wände unterschiedlicher Größe verwendet werden können, sodass ein modulartiger Aufbau der Vorrichtung realisierbar ist, um unterschiedliche Geometrien von Flyerketten fixieren bzw. festlegen zu können. Die Festlegung der Flyerkette erfolgt in jedem Fall durch eine Klemmung der endseitigen Laschen über einen bzw. mehrere Teilabschnitte der Außenkontur bzw. der Außenumfangsfläche.

Vorzugsweise kann es vorgesehen sein, dass eine Anlagefläche für die Lasche des letzten Endglieds der Flyerkette vorgesehen ist. Insbesondere bevorzugt ist die Anlagefläche für die Lasche des Endglieds so angeordnet, dass sie sich quer zur Richtung der Zugkraft auf die festzulegende Flyerkette erstreckt bzw. die Flächennormale der Anlagefläche im Wesentlichen parallel zur Richtung der Zugkraft auf die Flyerkette ist. Hierdurch wird eine Anlagefläche quer zur Zugkraft, die auf die Flyerkette wirkt, geschaffen, die effektiv wirken kann.

Die Vorrichtung kann einen Anschluss für eine längenveränderbare Befestigungseinrichtung haben. Der Anschluss kann durch eine Klammer-, Schnapp oder Schraubverbindung erfolgen. Die längenveränderbare Befestigungseinrichtung kann durch einen Gewindestab als Teil der Befestigungseinrichtung realisiert sein. Durch eine derartige Ausgestaltung kann eine Vorrichtung erreicht werden, bei der der Abstand zwischen dem fixierten Ende der Flyerkette und einem Befestigungspunkt der Vorrichtung bzw. an einer Gabelstaplerhubmaststruktur einstellbar ist.

Bevorzugt weist die Vorrichtung zwei gegenüberliegende Innenwandungen auf, die einen Abstand zueinander aufweisen, der größer als die Laschenhöhe und kleiner als das zweifache der Laschenhöhe ist. Durch eine derartige Ausgestaltung kann eine effiziente Klemmung und damit eine effiziente Festlegung bzw. Anbindung der Laschenkette an eine Hubmaststruktur erreicht werden.

Vorzugsweise ist der Abstand der zwei gegenüberliegenden Innenwandungen dabei so gewählt, dass mindestens drei endseitige Glieder der Flyerkette zumindest in Teilabschnitten wechselseitig in Anlage der Außenumfangsfläche zueinander gelangen. Insbesondere kann durch einen geeigneten Abstand der gegenüberliegenden Innenwandungen erreicht werden, dass die Laschen zweier der drei Glieder, die durch das dritte Glied voneinander beabstandet sind, in Anlage zueinander gelangen und geklemmt werden, wobei die beiden Glieder der Flyerkette aufeinandergelegt werden. Die endseitig angeordneten Glieder der Flyerkette werden demnach in der Vorrichtung um- bzw. aufeinandergelegt und an Teilabschnitten der Außenumfangsfläche mit den Innenwandungen geklemmt.

Die Erfindung wird nachfolgend anhand eines in den Zeichnungen dargestellten Ausführungsbeispiels näher erläutert. In den Zeichnungen zeigen:
- Fig. 1:: eine isometrische schematische Teilschnittdarstellung einer erfindungsgemäßen Vorrichtung mit einer festgelegten Flyerkette;
- Fig. 2:: eine Seitenansicht der Vorrichtung von Fig. 1 mit einer Befestigungseinrichtung;
- Fig. 3:: eine isometrische Darstellung einer weiteren Ausführungsform einer erfindungsgemäßen Vorrichtung; und
- Fig. 4:: eine Seitenansicht der Vorrichtung von Fig. 3.

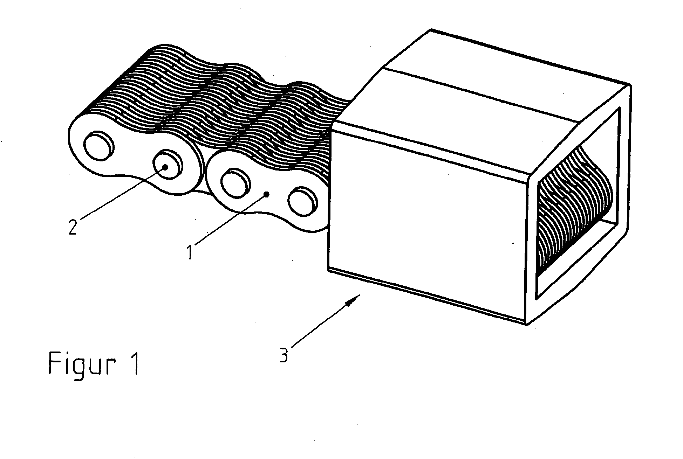

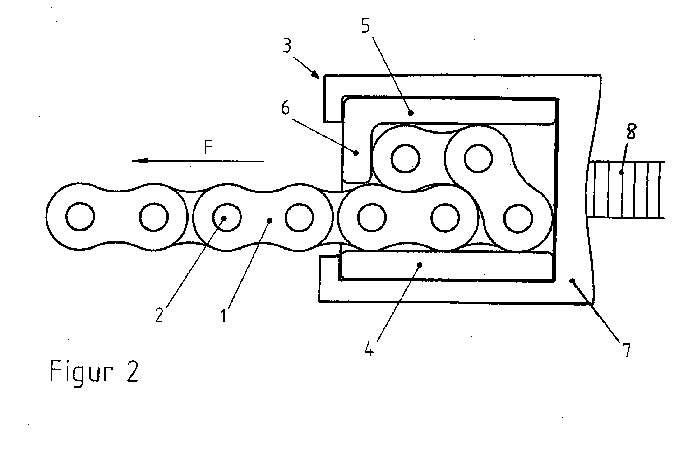

Fig. 1 zeigt schematisch eine erfindungsgemäße Vorrichtung, die als Kettenanker einer Flyerkette dient. Die Laschen 1 und Kettenbolzen 2 aufweisende Flyerkette wird in der Vorrichtung 3 festgelegt. Die Festlegung erfolgt durch eine Klemmung, bei der eine Kraft auf Teilabschnitte einer Umfangsfläche zumindest einer innerhalb der Vorrichtung 3 angeordneten Lasche 1 ausgeübt wird. Im dargestellten Ausführungsbeispiel umgibt die Vorrichtung 3 drei endseitige Glieder der Flyerkette mit den entsprechenden Laschen 1. Wie aus der Figur 2 zu sehen ist, ist das letzte Glied der Flyerkette auf das vorvorletzte Glied umgelegt.

Im dargestellten Ausführungsbeispiel ist eine Wand bzw. Innenwandung 4 lösbar mit einer Innenwandung 5 der Vorrichtung 3 verbunden. Zur Ausbildung der Festlegung der Flyerkette in der Vorrichtung 3 wird das Kettenende der Flyerkette in die Vorrichtung 3 eingeführt, die letzten Kettenglieder umgelegt und die Vorrichtung durch Verbinden der Innenwandung 4 mit der Innenwandung 5 geschlossen, wodurch eine außen auf die Laschen 1, nämlich Teilabschnitte der Außenumfangsflächen der Laschen 1, wirkende Klemmkraft bzw. Klemmverbindung ausgebildet wird.

An der Innenwandung 5 ist eine senkrecht zur Innenwandung 5 verlaufende Anlagefläche 6 ausgebildet, an der die Laschen 1 des letzten Kettenglieds der Flyerkette anliegen. Die Anlagefläche 6 verläuft quer zur Richtung der auf die Flyerkette wirkenden Zugkraft, die durch den mit dem Bezugszeichen F versehenen Pfeil in Figur 2 schematisch eingezeichnet ist.

Das vorletzte Glied der Flyerkette wird in der Vorrichtung 3 so geklemmt, dass die Längserstreckung der Laschen des vorletzten Gliedes eine von der Zugkraft abweichende Richtung aufweisen.

In Figur 2 ist zudem eine längenveränderbare Befestigungseinrichtung 7 schematisch gezeigt, mit der der Abstand zwischen dem fixierten Ende der Flyerkette und einem Befestigungspunkt veränderbar ist. Dazu ist an der Befestigungseinrichtung 7 ein mit dieser verbundener Gewindestab 8 befestigt, mit dem ein Abstand über eine ein Innengewinde aufweisende Aufnahmevorrichtung in der Höhe veränderbar ist.

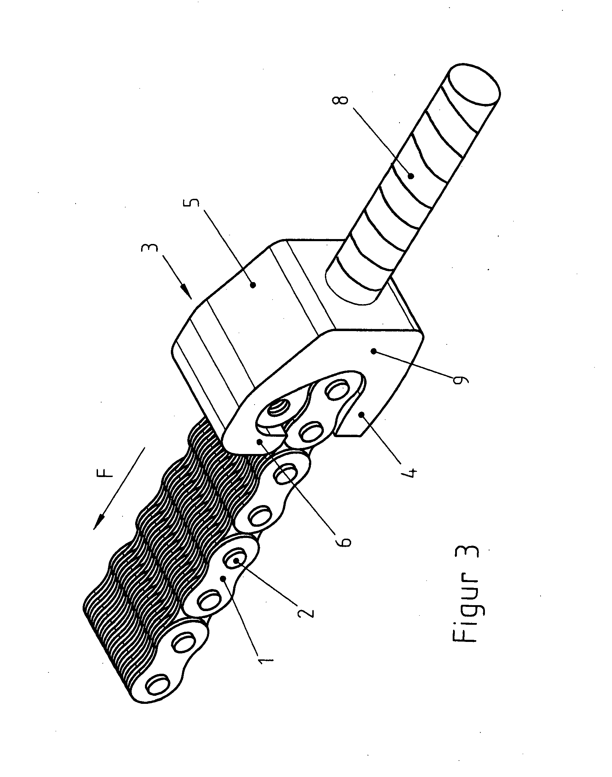

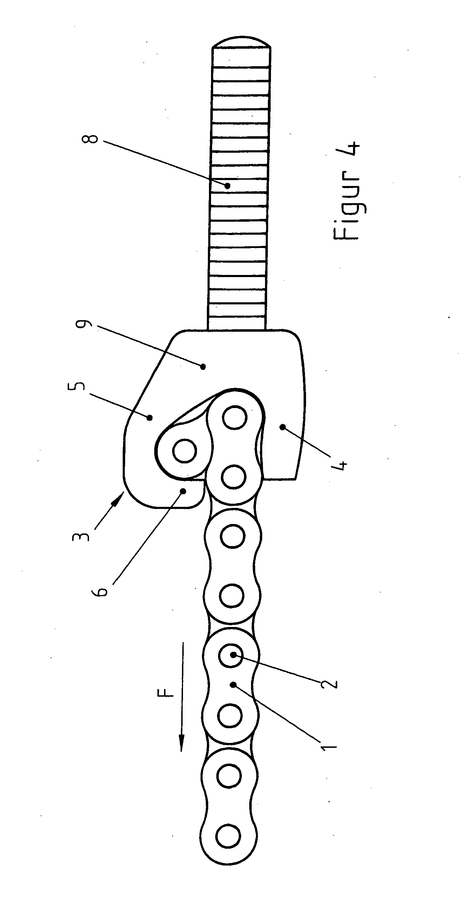

In den Figuren 3 und 4 ist eine weitere Ausführungsform einer erfindungsgemäßen Vorrichtung 3 gezeigt. Die Innenwandungen 4 und 5 sind fest mit einer Basiswandung 9 verbunden. Ferner ist die Anlagefläche 6 fest mit der Innenwandung 5 verbunden. Die Innenwandungen 4 und 5 sowie die Anlagefläche 6 und die Basiswandung 9 können aus einem Teil einstückig ausgestaltet sein. An der beabstandeten Seite zur Flyerkette ist an der Basiswandung 9 ein Gewindestab 8 befestigt. Die Festlegung der Flyerkette innerhalb der Vorrichtung 3 erfolgt ebenso wie die Festlegung im ersten Ausführungsbeispiel durch eine Klemmung. Die Vorrichtung 3 umgibt zumindest ein endseitiges Glied der Flyerkette mit den entsprechenden Laschen 1 und ein Teil des vorletzten Gliedes befindet sich ebenfalls in Anlage zur Vorrichtung 3. Das letzte Glied der Flyerkette ist auf das vorletzte Glied umgelegt. Zur Festlegung der Flyerkette wird gemäß der weiteren Ausführungsform das endseitige Ende der Flyerkette seitlich in die Vorrichtung 3 eingeführt, wobei das letzte Glied auf das vorletzte Glied umgelegt ist.

## Patentansprüche

1. Vorrichtung zur endseitigen Festlegung einer Flyerkette, **dadurch gekennzeichnet, dass** die Festlegung durch eine Klemmung mit einer Ausübung einer Kraft auf Teilabschnitte einer Außenumfangsfläche zumindest einer Lasche (1) zumindest eines endseitigen Glieds der Flyerkette durchführbar ist.

2. Vorrichtung nach Anspruch 1, **dadurch gekennzeichnet, dass** die zumindest eine Lasche (1) innerhalb der Vorrichtung in Anlage der Teilabschnitte zur Ausbildung der Klemmung derart mit der Vorrichtung gelangt, dass die Längserstreckung der Lasche (1) eine von der Zugkraft abweichende Richtung aufweist.

3. Vorrichtung nach Anspruch 1 oder 2, **dadurch gekennzeichnet, dass** die Vorrichtung ein zumindest teilweise umschlossenes Volumen zur Aufnahme eines Endes der Flyerkette aufweist.

4. Vorrichtung nach einem der Ansprüche 1 bis 3, **dadurch gekennzeichnet, dass** für die Klemmung lösbar miteinander verbindbare Wände (4, 5) vorgesehen sind.

5. Vorrichtung nach Anspruch 4, **dadurch gekennzeichnet, dass** der Abstand zwischen den Wänden (4, 5) modulartig veränderbar ist.

6. Vorrichtung nach einem der Ansprüche 1 bis 5, **dadurch gekennzeichnet, dass** eine Anlagefläche (6) für zumindest eine Lasche (1) des Endglieds vorgesehen ist.

7. Vorrichtung nach Anspruch 6, **dadurch gekennzeichnet, dass** die Anlagefläche (6) sich quer zur Richtung der Zugkraft (F) auf die festzulegende Flyerkette erstreckt.

8. Vorrichtung nach einem der Ansprüche 1 bis 7, **dadurch gekennzeichnet, dass** eine längenveränderbare Befestigungseinrichtung (7) vorgesehen ist, mit der der Abstand zwischen dem fixierten Ende der Flyerkette und einem Befestigungspunkt der Vorrichtung veränderbar ist.

9. Vorrichtung nach einem der Ansprüche 1 bis 8, **dadurch gekennzeichnet, dass** zwei gegenüberliegende Wände (4, 5) einen Abstand zueinander aufweisen, der größer als die Laschenhöhe und kleiner als das zweifache der Laschenhöhe ist.

10. Vorrichtung nach Anspruch 9, **dadurch gekennzeichnet, dass** der Abstand der zwei gegenüberliegenden Wände (4, 5) so gewählt ist, dass mindestens drei endseitige Glieder der Flyerkette zumindest in Teilabschnitten wechselseitig in Anlage der Außenumfangsfläche zueinander gelangen.
